# EUROPEAN PATENT APPLICATION

(11) **EP 4 769 507 A1**
(43) Date of publication of application: **01.07.2026**
(21) Application number: 24875912.8
(22) Date of filing: 23.02.2024
(51) Int. Cl.: H01M 4/13, H01M 4/36, H01M 4/38, H01M 4/583, H01M 10/0525

(54) **NEGATIVE ELECTRODE SHEET, SECONDARY BATTERY AND ELECTRIC DEVICE**

(30) Priority: 08.10.2023 CN 202311289975
(71) Applicant: Contemporary Amperex Technology Co., Limited, Ningde, Fujian 352100 (CN)
(72) Inventor: WU, Kai, Ningde, Fujian 352100 (CN); JIN, Haizu, Ningde, Fujian 352100 (CN); CHEN, Ning, Ningde, Fujian 352100 (CN); SHI, Dongyang, Ningde, Fujian 352100 (CN); DENG, Yaqian, Ningde, Fujian 352100 (CN); LV, Ruijing, Ningde, Fujian 352100 (CN); WANG, Yuzhen, Ningde, Fujian 352100 (CN); WANG, Juan, Ningde, Fujian 352100 (CN)
(74) Representative: Gong, Jinping
(86) International application number: PCT/CN2024/078384
(87) International publication number: WO 2025/077083

(57) **Abstract**

The present application provides a negative electrode sheet, a secondary battery, and an electric device. The negative electrode sheet includes a negative electrode current collector, a buffer layer, and an active layer, where the buffer layer is located between the negative electrode current collector and the active layer; the buffer layer includes a first binder; and an active material of the active layer includes silicon-carbon composite particles, and the silicon-carbon composite particles include a porous carbon material and a silicon material located in pores of the porous carbon material. The introduction of the silicon-carbon composite particles in the active layer can provide a good basis for improving the energy density of a battery. In addition, the buffer layer including the first binder is disposed between the negative electrode current collector and the active layer, so that an acting force of the silicon-carbon composite particles on the negative electrode current collector in a cold pressing process can be buffered, a risk of damage to the negative electrode current collector caused by the silicon-carbon composite particles can be reduced, and then the negative electrode current collector can maintain good structural stability, thereby improving cycle performance of the battery.

## Description

### CROSS-REFERENCE TO RELATED APPLICATIONS

The present application claims the priority to Chinese Patent Application No. 2023112899756, filed on October 8, 2023, and entitled "Negative Electrode Sheet, Secondary Battery, and Electric Device", which is incorporated herein by reference in its entirety.

### TECHNICAL FIELD

The present application relates to the technical field of secondary batteries, and in particular, to a negative electrode sheet, a secondary battery, and an electric device.

### BACKGROUND

The statement here merely provides the background information related to the present application and does not necessarily constitute the prior art.

The introduction of silicon-carbon composite particles as a negative electrode active material in a secondary battery may enable the battery to have a high energy density. However, the silicon-carbon composite particles often have a high hardness, and the silicon-carbon composite particles are easily embedded into a negative electrode current collector in a cold pressing process to damage the current collector, which may then affect cycle performance of the battery.

### SUMMARY

A first aspect of the present application provides a negative electrode sheet. The negative electrode sheet comprises a negative electrode current collector, a buffer layer, and an active layer, where the buffer layer is located between the negative electrode current collector and the active layer; the buffer layer includes a first binder; and an active material of the active layer comprises silicon-carbon composite particles, and the silicon-carbon composite particles comprise a porous carbon material and a silicon material located in pores of the porous carbon material.

In the negative electrode sheet, the introduction of the silicon-carbon composite particles in the active layer can provide a good basis for improving the energy density of a battery. In addition, the buffer layer including the first binder is disposed between the negative electrode current collector and the active layer, so that an acting force of the silicon-carbon composite particles on the negative electrode current collector in a cold pressing process can be buffered on the basis of maintaining good adhesive performance between the active layer and the negative electrode sheet, and the buffer layer can also reduce the probability of direct contact between the silicon-carbon composite particles and the negative electrode current collector. In this way, a risk of damage to the negative electrode current collector caused by the silicon-carbon composite particles can be reduced, and then the negative electrode current collector can maintain good structural stability, thereby improving cycle performance of the battery.

In some implementations, the thickness of the buffer layer is 0.5 µm to 5 µm. On the one hand, the buffer layer having the thickness within this range can exhibit a good buffering effect. On the other hand, the buffer layer has a small thickness and occupies a small thickness in the negative electrode sheet, so that the active layer can have a proper thickness, and the active material can be maintained in a proper amount, which helps the battery to maintain a proper energy density. In addition, the buffer layer has a small thickness, so that the entire negative electrode sheet can maintain a proper thickness, and then the battery can maintain a proper volume.

In some implementations, the buffer layer further includes a first conductive agent. The first conductive agent can promote transmission of lithium ions in the negative electrode sheet, which helps improve performance of a secondary battery. Optionally, the mass ratio of the first conductive agent to the first binder is (5-40):(60-95). Optionally, the first conductive agent comprises at least one of superconducting carbon, acetylene black, carbon black, Ketjen black, carbon dots, carbon nanotubes, graphene, and carbon nanofibers.

In some implementations, the first binder comprises at least one of sodium carboxymethyl cellulose, lithium carboxymethyl cellulose, and styrene-butadiene rubber. The first binder can promote bonding between the active layer and the current collector, which helps improve structural stability of the negative electrode sheet.

In some implementations, the buffer layer further includes first graphite. On the one hand, the first graphite may serve as an active material to further improve the energy density of the secondary battery. On the other hand, graphite has a soft texture, which can further improve buffering performance of the buffer layer and further reduce the risk of damage to the negative electrode current collector caused by the silicon-carbon composite particles in the cold pressing process. In addition, the introduction of the first graphite can further improve conductive performance of the buffer layer, and further promote the transmission of lithium ions in the negative electrode sheet, thereby improving the performance of the secondary battery. Optionally, the mass percentage of the first graphite in the buffer layer is 50% to 80%.

In some implementations, the active material of the active layer further comprises second graphite. In a charging process, the silicon-carbon composite particles have a high expansion rate. The introduction of the second graphite in the active layer can buffer expansion of the silicon-carbon composite particles, which helps improve the structural stability of the negative electrode sheet in a cycling process, thereby improving cycle performance of the secondary battery. In addition, since the silicon-carbon composite particles generally have high brittleness, pulverization is likely to occur in the cold pressing process. In addition, the introduction of the second graphite can play a certain protective effect on the silicon-carbon composite particles, and reduce a risk of pulverization of the silicon-carbon composite particles in the cold pressing process, which can further improve the structural stability of the negative electrode sheet and further improve the cycle performance of the secondary battery. Optionally, the mass ratio of the second graphite to the silicon-carbon composite particles is (50-95):(5-50).

In some implementations, the active layer comprises a first active sublayer and a second active sublayer, and the first active sublayer is located between the buffer layer and the second active sublayer; and an active material of the first active sublayer comprises third graphite, and an active material of the second active sublayer comprises the silicon-carbon composite particles. By designing the active layer comprising the first active sublayer and the second active sublayer, the first active sublayer can further buffer the acting force of the silicon-carbon composite particles on the negative electrode current collector in the cold pressing process, to further reduce the risk of damage to the negative electrode current collector caused by the silicon-carbon composite particles.

In some implementations, the active material of the first active sublayer further comprises a silicon-oxygen material. The silicon-oxygen material has a high gram capacity, and the introduction of the silicon-oxygen material in the first active sublayer can further improve the energy density of the secondary battery. Optionally, the mass ratio of the third graphite to the silicon-oxygen material is (50-75):(25-50).

In some implementations, the first active sublayer further includes a second conductive agent. The introduction of the second conductive agent can further promote the transmission of lithium ions in the negative electrode sheet, to improve the performance of the secondary battery. Optionally, the mass percentage of the second conductive agent in the first active sublayer is 0.5% to 3%.

In some implementations, the second conductive agent comprises carbon nanotubes and carbon black. The combination of the carbon nanotubes and the carbon black can provide good conductive performance. Further, the carbon nanotubes can form a bridging effect between the silicon-oxygen material and the third graphite, to further promote improvement of the conductive performance. Optionally, a value of the mass ratio of the carbon nanotubes to the carbon black is greater than or equal to 1.

In some implementations, the first active sublayer further includes a second binder. The introduction of the second binder can improve a bonding effect between materials in the first active sublayer, so that the first active sublayer maintains a more stable structure. In addition, the introduction of the second binder can improve bonding performance between the first active sublayer and the buffer layer, and can also improve bonding performance between the first active sublayer and the second active sublayer. Optionally, the mass percentage of the second binder in the first active sublayer is 1% to 4%. Optionally, the second binder comprises at least one of styrene-butadiene rubber, polyacrylic acid, sodium polyacrylate, polyacrylamide, polyvinyl alcohol, sodium alginate, polymethacrylic acid, and carboxymethyl chitosan.

In some implementations, the active material of the second active sublayer further comprises fourth graphite. The introduction of the fourth graphite in the second active sublayer can buffer expansion of the silicon-carbon composite particles, which helps improve the structural stability of the negative electrode sheet in the cycling process, thereby improving the cycle performance of the secondary battery. In addition, the introduction of the fourth graphite can play a certain protective effect on the silicon-carbon composite particles, and reduce the risk of pulverization of the silicon-carbon composite particles in the cold pressing process, which can further improve the structural stability of the negative electrode sheet and further improve the cycle performance of the secondary battery. Optionally, the mass ratio of the fourth graphite to the silicon-carbon composite particles is (50-95):(5-50).

In some implementations, the second active sublayer further includes a third conductive agent. The introduction of the third conductive agent can further promote the transmission of lithium ions in the negative electrode sheet, to improve the performance of the secondary battery. Optionally, the mass percentage of the third conductive agent in the second active sublayer is 0.5% to 3%.

In some implementations, the third conductive agent comprises carbon nanotubes and carbon black. The combination of the carbon nanotubes and the carbon black can provide good conductive performance. Further, the carbon nanotubes may form a bridging effect between the silicon-carbon composite particles and the fourth graphite, to further promote the improvement of the conductive performance. Optionally, a value of the mass ratio of the carbon nanotubes to the carbon black is greater than or equal to 1.

In some implementations, the second active sublayer further includes a third binder. The introduction of the third binder can improve a bonding effect between materials in the second active sublayer, so that the second active sublayer maintains a more stable structure. In addition, the introduction of the third binder can improve the bonding performance between the first active sublayer and the second active sublayer. Optionally, the mass percentage of the third binder in the second active sublayer is 1% to 4%. Optionally, the third binder comprises at least one of styrene-butadiene rubber, polyacrylic acid, sodium polyacrylate, polyacrylamide, polyvinyl alcohol, sodium alginate, polymethacrylic acid, and carboxymethyl chitosan.

In some implementations, the thickness ratio of the first active sublayer to the second active sublayer is (2-5):(5-8). The thickness ratio of the first active sublayer to the second active sublayer within this range can enable the negative electrode sheet to have good structural stability, and enable the secondary battery to have a high energy density and good cycle performance.

A second aspect of the present application provides a secondary battery. The secondary battery comprises the negative electrode sheet.

A third aspect of the present application provides an electric device. The electric device comprises at least one of the negative electrode sheet and the secondary battery.

### DESCRIPTION OF DRAWINGS

To better describe and illustrate embodiments and/or examples provided in the present application, reference may be made to one or a plurality of accompanying drawings. Additional details or examples used to describe the accompanying drawings should not be considered as limiting the scope of any of the disclosed application, the currently described embodiments or examples, and best modes of these applications as currently understood. Moreover, the same reference numerals are used to denote the same components throughout the accompanying drawings. In the accompanying drawings:
FIG. 1 is a schematic diagram of a secondary battery according to an implementation of the present application;
FIG. 2 is an exploded view of the secondary battery according to the implementation of the present application shown in FIG. 1; and
FIG. 3 is a schematic diagram of an electric device using a secondary battery as a power supply according to an implementation of the present application.

### Description of reference signs:

1-secondary battery; 11-housing; 12-electrode assembly; 13-cover plate; and 2-electric device.

### DESCRIPTION OF EMBODIMENTS

In order to facilitate the understanding of the present application, the present application will be described more fully below with reference to the relevant drawings. Preferred embodiments of the present application are given in the drawings. However, the present application can be implemented in many different forms and is not limited to the embodiments described herein. On the contrary, the purpose of providing these embodiments is to make the understanding of the disclosed content of the present application more thorough and comprehensive.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The term "and/or" used herein includes any and all combinations of one or more of associated listed items.

The "range" disclosed in the present application is limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if ranges of 60 to 120 and 80 to 110 are listed for specific parameters, it is understood that the ranges of 60 to 110 and 80 to 120 are also expected. In addition, if the smallest values 1 and 2 of a range are listed, and if the largest values 3, 4 and 5 of the range are listed, the following ranges are all expected: 1 to 3, 1 to 4, 1 to 5, 2 to 3, 2 to 4, and 2 to 5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

Unless otherwise defined, "multiple", "a plurality of" and the like related in the present application mean a number of two or more. For example, "one or more" means one or greater or equal to two.

Unless otherwise specified, all embodiments and optional embodiments of the present application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by those skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly. In some implementations, the steps are performed sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A consists of a1, a2, and a3" and a feature or solution in which "A includes not only a1, a2, and a3 but also another member" are provided.

In the present application, unless otherwise specified, A (e.g., B) means that B is a non-limiting example of A, and it may be understood that A is not limited to B.

In the present application, "optionally", "optional", and "option" mean that there is or not, that is, mean any one of two parallel solutions: "with" or "without". If "option" occurs repeatedly in a technical solution, each "option" is independent, unless otherwise specified without inconsistency or mutual restriction.

An implementation of the present application provides a negative electrode sheet. The negative electrode sheet includes a negative electrode current collector, a buffer layer, and an active layer, where the buffer layer is located between the negative electrode current collector and the active layer. The buffer layer includes a first binder. An active material of the active layer includes silicon-carbon composite particles, and the silicon-carbon composite particles include a porous carbon material and a silicon material located in pores of the porous carbon material.

In the negative electrode sheet of this embodiment, the introduction of the silicon-carbon composite particles in the active layer can provide a good basis for improving the energy density of a battery. In addition, the buffer layer including the first binder is disposed between the negative electrode current collector and the active layer, so that an acting force of the silicon-carbon composite particles on the negative electrode current collector in a cold pressing process can be buffered on the basis of maintaining good adhesive performance between the active layer and the negative electrode sheet, and the buffer layer can also reduce the probability of direct contact between the silicon-carbon composite particles and the negative electrode current collector. In this way, a risk of damage to the negative electrode current collector caused by the silicon-carbon composite particles can be reduced, and then the negative electrode current collector can maintain good stability, thereby improving cycle performance of the battery.

Further, in the negative electrode sheet of this implementation, since a problem of damage to the negative electrode current collector by a silicon-oxygen composite is well alleviated, pressure-resistant performance of the negative electrode sheet can be improved. In this way, the compacted density of the negative electrode sheet can be correspondingly improved on the basis of maintaining good structural stability of the negative electrode current collector, and then a good basis for further improving the energy density of a secondary battery can be provided.

As some examples of the thickness of the buffer layer, the thickness of the buffer layer is 0.5 micrometer (µm) to 5 µm. On the one hand, the buffer layer having the thickness within this range can exhibit a good buffering effect. On the other hand, the buffer layer has a small thickness and occupies a small thickness in the negative electrode sheet, so that the active layer can have a proper thickness, and the active material can be maintained in a proper amount, which helps the battery to maintain a proper energy density. In addition, the buffer layer has a small thickness, so that the entire negative electrode sheet can maintain a proper thickness, and then the battery can maintain a proper volume. Optionally, the thickness of the buffer layer may be 0.5 µm, 1 µm, 1.5 µm, 2 µm, 2.5 µm, 3 µm, 3.5 µm, 4 µm, 4.5 µm, 5 µm, or the like.

In some implementations, the buffer layer further includes a first conductive agent. The first conductive agent can promote transmission of lithium ions in the negative electrode sheet, which helps improve performance of the secondary battery. Optionally, the first conductive agent includes at least one of superconducting carbon, acetylene black, carbon black, Ketjen black, carbon dots, carbon nanotubes, graphene, and carbon nanofibers. Further optionally, the mass ratio of the first conductive agent to the first binder is (5-40):(60-95). For example, the mass ratio of the first conductive agent to the first binder may be 5:95, 10:90, 20:80, 30:70, 40:60, or the like.

In the present application, as some optional examples of the first binder, the first binder includes at least one of sodium carboxymethyl cellulose, lithium carboxymethyl cellulose, and styrene-butadiene rubber. The first binder can promote bonding between the active layer and the current collector, which helps improve structural stability of the negative electrode sheet.

In some implementations, the buffer layer further includes first graphite. On the one hand, the first graphite may serve as an active material to further improve the energy density of the secondary battery. On the other hand, graphite has a soft texture, which can further improve buffering performance of the buffer layer and further reduce the risk of damage to the negative electrode current collector caused by the silicon-carbon composite particles in the cold pressing process. In addition, the introduction of the first graphite can further improve conductive performance of the buffer layer, and further promote the transmission of lithium ions in the negative electrode sheet, thereby improving the performance of the secondary battery. Optionally, the mass percentage of the first graphite in the buffer layer is 50% to 80%. Further optionally, the mass percentage of the first graphite in the buffer layer may be 50%, 55%, 60%, 65%, 70%, 75%, 80%, or the like.

In some implementations, the mass percentage of the silicon-carbon composite particles in the buffer layer is 0. The mass percentage of a silicon-oxygen material in the buffer layer is 0.

In some implementations, the active material of the active layer further includes second graphite. In a charging process, the silicon-carbon composite particles have a high expansion rate. The introduction of the second graphite in the active layer can buffer expansion of the silicon-carbon composite particles, which helps improve the structural stability of the negative electrode sheet in a cycling process, thereby improving cycle performance of the secondary battery. In addition, since the silicon-carbon composite particles generally have high brittleness, pulverization is likely to occur in the cold pressing process. In this implementation, the introduction of the second graphite can play a certain protective effect on the silicon-carbon composite particles, and reduce a risk of pulverization of the silicon-carbon composite particles in the cold pressing process, which can further improve the structural stability of the negative electrode sheet and further improve the cycle performance of the secondary battery.

Optionally, the mass ratio of the second graphite to the silicon-carbon composite particles is (50-95):(5-50). The mass ratio of the second graphite to the silicon-carbon composite particles within this range is more advantageous for maintaining good structural stability of the negative electrode sheet. Further optionally, the mass ratio of the second graphite to the silicon-carbon composite particles may be 50:50, 55:45, 60:40, 65:35, 70:30, 75:25, 80:20, 85:15, 90:10, 95:5, or the like.

In some implementations, the active layer includes a first active sublayer and a second active sublayer, and the first active sublayer is located between the buffer layer and the second active sublayer. An active material of the first active sublayer includes third graphite, and an active material of the second active sublayer includes the silicon-carbon composite particles. By designing the active layer including the first active sublayer and the second active sublayer, the first active sublayer can further buffer the acting force of the silicon-carbon composite particles on the negative electrode current collector in the cold pressing process, to further reduce the risk of damage to the negative electrode current collector caused by the silicon-carbon composite particles.

In some implementations, the active material of the second active sublayer further includes fourth graphite. The introduction of the fourth graphite in the second active sublayer can buffer expansion of the silicon-carbon composite particles, which helps improve the structural stability of the negative electrode sheet in the cycling process, thereby improving the cycle performance of the secondary battery. In addition, the introduction of the fourth graphite can play a certain protective effect on the silicon-carbon composite particles, and reduce the risk of pulverization of the silicon-carbon composite particles in the cold pressing process, which can further improve the structural stability of the negative electrode sheet and further improve the cycle performance of the secondary battery.

Optionally, the mass ratio of the fourth graphite to the silicon-carbon composite particles is (50-95):(5-50). The mass ratio of the fourth graphite to the silicon-carbon composite particles within this range is more advantageous for maintaining the good structural stability of the negative electrode sheet. Further optionally, the mass ratio of the fourth graphite to the silicon-carbon composite particles may be 50:50, 55:45, 60:40, 65:35, 70:30, 75:25, 80:20, 85:15, 90:10, 95:5, or the like.

It can be understood that the first graphite, the second graphite, the third graphite, and the fourth graphite may be independently selected from at least one of natural graphite and synthetic graphite. It can also be understood that the first graphite, the second graphite, the third graphite, and the fourth graphite may be the same or different.

In some implementations, the active material of the first active sublayer further includes a silicon-oxygen material. The silicon-oxygen material has a high gram capacity, and the introduction of the silicon-oxygen material in the first active sublayer can further improve the energy density of the secondary battery. Optionally, the mass ratio of the third graphite to the silicon-oxygen material is (50-75):(25-50). Further optionally, the mass ratio of the third graphite to the silicon-oxygen material may be 50:50, 55:45, 60:40, 65:35, 70:30, 75:25, or the like.

It can be understood that the silicon-oxygen material includes a material with a chemical formula of SiOₓ, where 0<x<2. Further optionally, 0.5≤x≤1.5.

In some implementations, the first active sublayer further includes a second conductive agent. The introduction of the second conductive agent can further promote the transmission of lithium ions in the negative electrode sheet, to improve the performance of the secondary battery. Optionally, the mass percentage of the second conductive agent in the first active sublayer is 0.5% to 3%. The mass percentage of the second conductive agent in the first active sublayer within this range can enable the active material in the first active sublayer to maintain a high proportion on the basis of improving the transmission of lithium ions, to promote improvement of the energy density of the secondary battery. Further optionally, the mass percentage of the second conductive agent in the first active sublayer may be 0.5%, 0.8%, 1%, 1.2%, 1.5%, 1.8%, 2%, 2.2%, 2.5%, 2.8%, 3%, or the like.

In some implementations, the second conductive agent includes carbon nanotubes and carbon black. The combination of the carbon nanotubes and the carbon black can provide good conductive performance. Further, the carbon nanotubes can form a bridging effect between the silicon-oxygen material and the third graphite, to further promote improvement of the conductive performance. Further optionally, a value of the mass ratio of the carbon nanotubes to the carbon black is greater than or equal to 1. For example, the value of the mass ratio of the carbon nanotubes to the carbon black is greater than or equal to 1.5, the value of the mass ratio of the carbon nanotubes to the carbon black is greater than or equal to 2, the value of the mass ratio of the carbon nanotubes to the carbon black is greater than or equal to 2.5, the value of the mass ratio of the carbon nanotubes to the carbon black is greater than or equal to 3, or the like.

In some implementations, the first active sublayer further includes a second binder. The introduction of the second binder can improve a bonding effect between materials in the first active sublayer, so that the first active sublayer maintains a more stable structure. In addition, the introduction of the second binder can improve bonding performance between the first active sublayer and the buffer layer, and can also improve bonding performance between the first active sublayer and the second active sublayer.

Optionally, the mass percentage of the second binder in the first active sublayer is 1% to 4%. For example, the mass percentage of the second binder in the first active sublayer is 1%, 1.5%, 2%, 2.5%, 3%, 3.5%, 4%, or the like. The mass percentage of the second binder in the first active sublayer within this range can enable the active material in the first active sublayer to maintain a high proportion on the basis of improving the bonding performance, to promote the improvement of the energy density of the secondary battery.

Further optionally, the second binder includes at least one of styrene-butadiene rubber, polyacrylic acid, sodium polyacrylate, polyacrylamide, polyvinyl alcohol, sodium alginate, polymethacrylic acid, and carboxymethyl chitosan.

In some implementations, the first active sublayer further includes a first thickening agent. Optionally, the mass percentage of the first thickening agent in the first active sublayer is 0.5% to 2%. Further optionally, the mass percentage of the first thickening agent in the first active sublayer is 0.5%, 0.8%, 1%, 1.2%, 1.5%, 1.8%, 2%, or the like. Still further optionally, the first thickening agent includes sodium carboxymethyl cellulose.

In some implementations, the mass percentage of the silicon-carbon composite particles in the first active sublayer is 0.

In some implementations, the second active sublayer further includes a third conductive agent. The introduction of the third conductive agent can further promote the transmission of lithium ions in the negative electrode sheet, to improve the performance of the secondary battery. Optionally, the mass percentage of the third conductive agent in the second active sublayer is 0.5% to 3%. The mass percentage of the third conductive agent in the second active sublayer within this range can enable the active material in the second active sublayer to maintain a high proportion on the basis of improving the transmission of lithium ions, to promote the improvement of the energy density of the secondary battery. Further optionally, the mass percentage of the third conductive agent in the second active sublayer may be 0.5%, 0.8%, 1%, 1.2%, 1.5%, 1.8%, 2%, 2.2%, 2.5%, 2.8%, 3%, or the like.

In some implementations, the third conductive agent includes carbon nanotubes and carbon black. The combination of the carbon nanotubes and the carbon black can provide good conductive performance. Further, the carbon nanotubes may form a bridging effect between the silicon-carbon composite particles and the fourth graphite, to further promote the improvement of the conductive performance. Further optionally, a value of the mass ratio of the carbon nanotubes to the carbon black is greater than or equal to 1. For example, the value of the mass ratio of the carbon nanotubes to the carbon black is greater than or equal to 1.5, the value of the mass ratio of the carbon nanotubes to the carbon black is greater than or equal to 2, the value of the mass ratio of the carbon nanotubes to the carbon black is greater than or equal to 2.5, the value of the mass ratio of the carbon nanotubes to the carbon black is greater than or equal to 3, or the like.

In some implementations, the second active sublayer further includes a third binder. The introduction of the third binder can improve a bonding effect between materials in the second active sublayer, so that the second active sublayer maintains a more stable structure. In addition, the introduction of the third binder can improve the bonding performance between the first active sublayer and the second active sublayer.

Optionally, the mass percentage of the third binder in the second active sublayer is 1% to 4%. For example, the mass percentage of the third binder in the second active sublayer is 1%, 1.5%, 2%, 2.5%, 3%, 3.5%, 4%, or the like. The mass percentage of the third binder in the second active sublayer within this range can enable the active material in the second active sublayer to maintain a high proportion on the basis of improving the bonding performance, to promote the improvement of the energy density of the secondary battery.

Further optionally, the third binder includes at least one of styrene-butadiene rubber, polyacrylic acid, sodium polyacrylate, polyacrylamide, polyvinyl alcohol, sodium alginate, polymethacrylic acid, and carboxymethyl chitosan.

In some implementations, the second active sublayer further includes a second thickening agent. Optionally, the mass percentage of the second thickening agent in the second active sublayer is 0.5% to 2%. Further optionally, the mass percentage of the second thickening agent in the second active sublayer is 0.5%, 0.8%, 1%, 1.2%, 1.5%, 1.8%, 2%, or the like. Still further optionally, the second thickening agent includes sodium carboxymethyl cellulose.

In some implementations, the thickness ratio of the first active sublayer to the second active sublayer is (2-5):(5-8). The thickness ratio of the first active sublayer to the second active sublayer within this range can enable the negative electrode sheet to have good structural stability, and enable the secondary battery to have a high energy density and good cycle performance. Optionally, the thickness ratio of the first active sublayer to the second active sublayer is 2:8, 2.5:7.5, 3:7, 3.5:6.5, 4:6, 4.5:5.5, 5:5, or the like.

In some implementations, the specific surface area of the porous carbon material is 500 square meters/gram (m²/g) to 1800 m²/g. The specific surface area of the porous carbon material within this range can provide a large space for attachment of the silicon material, to promote improvement of the energy density of the battery. Optionally, the specific surface area of the porous carbon material may be 500 m²/g, 600 m²/g, 700 m²/g, 800 m²/g, 900 m²/g, 1000 m²/g, 1100 m²/g, 1200 m²/g, 1300 m²/g, 1400 m²/g, 1500 m²/g, 1600 m²/g, 1700 m²/g, 1800 m²/g, or the like.

In some implementations, the mass percentage of the porous carbon material in the silicon-carbon composite particles is 40% to 80%. The mass percentage of the porous carbon material within this range can provide a good support for the silicon material, and can better adapt the mass of the porous carbon material to the mass of the silicon material, so that the battery has both a high energy density and good cycle stability. Optionally, the mass percentage of the porous carbon material in the silicon-carbon composite particles may be 40%, 45%, 50%, 55%, 60%, 65%, 70%, 75%, 80%, or the like.

In some implementations, Dv50 of the silicon-carbon composite particles is 3 µm to 20 µm. The Dv50 of the silicon-carbon composite particles within this range can enable an electrode sheet to have a good compacted density, which helps further improve the energy density of the battery. Optionally, the Dv50 of the silicon-carbon composite particles may be 3 µm, 5 µm, 8 µm, 10 µm, 12 µm, 15 µm, 18 µm, 20 µm, or the like.

It can be understood that, in the present application, Dv50 refers to a corresponding particle diameter when a cumulative particle size distribution number of the particles reaches 50% in a volume cumulative distribution curve, and a physical meaning of the Dv50 is that particles with a particle diameter less (or greater) than this particle diameter account for 50%. As an example, Dv50 can be obtained by referring to a GB/T 19077-2016 test method and using a particle size distribution curve obtained by a laser diffraction particle size distribution measuring instrument Mastersizer3000.

It can be understood that the silicon material in the silicon-carbon composite particles includes elemental silicon. The porous carbon material in the silicon-carbon composite particles includes porous hard carbon.

In some implementations, the compacted density of the negative electrode sheet is 1.3 gram/cubic centimeter (g/cm³) to 1.8 g/cm³. When the compacted density is within this range, the negative electrode sheet has a relatively stable structure, and the secondary battery can have a high energy density. Optionally, the compacted density of the negative electrode sheet may be 1.3 g/cm³, 1.4 g/cm³, 1.5 g/cm³, 1.6 g/cm³, 1.7 g/cm³, 1.8 g/cm³, or the like.

Another implementation of the present application provides a secondary battery. The secondary battery includes the negative electrode sheet described above.

Another implementation of the present application provides an electric device. The electric device includes at least one of the negative electrode sheet described above and the secondary battery described above.

The following appropriately describes the secondary battery and the electric device in the present application with reference to the accompanying drawings.

Generally, the secondary battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being short-circuited and allow ions to pass through.

### Positive electrode sheet

The positive electrode sheet includes a positive electrode current collector and a positive electrode film layer disposed on at least one surface of the positive electrode current collector, the positive electrode film layer including a positive electrode active material.

As a non-limiting example, the positive electrode current collector has two surfaces opposite to each other in its own thickness direction, and a positive electrode active material layer is disposed on either one or both of the two opposite surfaces of the positive electrode current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be obtained by forming a metal material on a polymer material substrate. In the positive electrode current collector, a non-limiting example of the metal material may include one or more of aluminum, an aluminum alloy, nickel, a nickel alloy, titanium, a titanium alloy, silver, a silver alloy, or the like. In the positive electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some embodiments, the positive electrode active material may be a positive electrode active material for a battery known in the art. As a non-limiting example, the positive electrode active material may include one or more of the following materials: olivine-structured lithium-containing phosphate, a lithium transition metal oxide, and their respective modified compounds. However, the present application is not limited to these materials, and other conventional materials that can be used as a positive electrode active material of a battery may also be used. These positive electrode active materials may be used alone or in combination of two or more thereof. An example of the lithium transition metal oxide may include, but is not limited to, one or more of lithium cobalt oxide (such as LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of the olivine-structured lithium-containing phosphate may include, but are not limited to, one or more of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and their respective modified compounds. A non-limiting example of the lithium cobalt oxide may include LiCoO₂; a non-limiting example of the lithium nickel oxide may include LiNiO₂; a non-limiting example of the lithium manganese oxide may include LiMnO₂, LiMn₂O₄, or the like; a non-limiting example of the lithium nickel cobalt manganese oxide may include LiNi_{1/3}Co_{1/3}Mn_{1/3}O₂ (or may be referred to as NCM₃₃₃ for short), LiNi_{0.5}Co_{0.2}Mn_{0.3}O₂ (or may be referred to as NCM₅₂₃ for short), LiNi_{0.5}Co_{0.25}Mn_{0.25}O₂ (or may be referred to as NCM₂₁₁ for short), LiNi_{0.6}Co_{0.2}Mn_{0.2}O₂ (or may be referred to as NCM₆₂₂ for short), LiNi_{0.8}Co_{0.1}Mn_{0.1}O₂ (or may be referred to as NCM₈₁₁ for short), or the like. A non-limiting example of the lithium nickel cobalt aluminum oxide may include LiNi_{0.8}Co_{0.15}Al_{0.05}O₂.

In some embodiments, the positive electrode active material layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode sheet may be prepared in the following manner: dispersing the foregoing components, for example, the positive electrode active material, the conductive agent, the binder, and any other components, for preparing the positive electrode sheet into a solvent to form a positive electrode slurry; and coating the positive electrode slurry on at least one side surface of the positive electrode current collector, and performing procedures such as drying and cold pressing, to obtain the positive electrode sheet. The type of solvent may be selected from any one in the foregoing implementations, for example, N-methylpyrrolidone (NMP). The surface of the positive electrode current collector to which the positive electrode slurry is applied may be a single surface of the positive electrode current collector or both surfaces of the positive electrode current collector. The surface of the positive electrode current collector to which the positive electrode slurry is applied may be a single surface of the positive electrode current collector or both surfaces of the positive electrode current collector. The solid content of the positive electrode slurry may be 40 weight% (wt%) to 80 wt%. The viscosity of the positive electrode slurry at room temperature may be adjusted to 5000 millipascal-second (mP·s) to 25000 mPa·s. During coating of the positive electrode slurry, the coating density per unit area on a dry weight basis (excluding the solvent) may be 15 milligrams/square centimeter (mg/cm²) to 35 mg/cm². The compacted density of the positive electrode sheet may be 3.0 g/cm³ to 3.6 g/cm³, and optionally, may be 3.3 g/cm³ to 3.5 g/cm³.

### Negative electrode sheet

The negative electrode sheet includes a negative electrode current collector and a negative electrode active material layer that is disposed on at least one surface of the negative electrode current collector, the negative electrode active material layer including a negative electrode active material.

As a non-limiting example, the negative electrode current collector has two surfaces opposite in its own thickness direction, and the negative electrode active material layer is disposed on either one or both of the two opposite surfaces of the negative electrode current collector.

In some embodiments, the negative electrode current collector may be metal foil or a composite current collector. For example, a copper foil may be used as the metal foil. The composite current collector may include a polymer material base layer and a metal layer formed on at least one surface of a polymer material substrate. The composite current collector may be obtained by forming a metal material on a polymer material substrate. In the negative electrode current collector, a non-limiting example of the metal material may include one or more of copper, a copper alloy, nickel, a nickel alloy, titanium, a titanium alloy, silver, a silver alloy, or the like. In the negative electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some embodiments, the negative electrode active material may be a negative electrode active material for a battery known in the art. As a non-limiting example, the negative electrode active material may include one or more of the following materials: synthetic graphite, natural graphite, soft carbon, hard carbon, a silicon-based material, a tin-based material, lithium titanate, and the like. The silicon-based material may include one or more of elemental silicon, a silicon-oxygen compound, silicon-carbon composite particles, a silicon-nitrogen composite, and a silicon alloy. The tin-based material may include one or more of elemental tin, a tin-oxygen compound, and a tin alloy. However, the present application is not limited to these materials, and another conventional material that can be used as a negative electrode active material of a battery may also be used. These negative electrode active materials may be used alone or in combination of two or more thereof.

In some embodiments, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may include at least one or more of superconducting carbon, acetylene black, carbon black, Ketjen black, carbon dots, carbon nanotubes, graphene, and carbon nanofibers.

In some embodiments, the negative electrode active material layer further optionally includes another auxiliary agent, for example, a thickening agent (e.g., sodium carboxymethyl cellulose (CMC-Na)).

In some embodiments, the negative electrode sheet may be prepared in the following manner: dispersing the foregoing components, for example, the negative electrode active material, the conductive agent, the binder, and any other components, for preparing the negative electrode sheet into a solvent (a non-limiting example of the solvent, e.g., deionized water) to form a negative electrode slurry; and coating the negative electrode slurry on at least one side surface of the negative electrode current collector, and performing procedures such as drying and cold pressing, to obtain the negative electrode sheet. The surface of the negative electrode current collector on which the negative electrode slurry is coated may be a single surface of the negative electrode current collector or both surfaces of the negative electrode current collector. The solid content of the negative electrode slurry may be 40 wt% to 60 wt%. The viscosity of the negative electrode slurry at room temperature may be adjusted to 2000 mPa·s to 10000 mPa·s. During coating of the negative electrode slurry, the coating density per unit area on a dry weight basis (excluding the solvent) may be 75 grams/square meter (g/m²) to 220 g/m². The compacted density of the negative electrode sheet may be 1.0 g/cm³ to 1.8 g/cm³.

Electrolyte

The electrolyte functions to conduct ions between the positive electrode sheet and the negative electrode sheet. The type of the electrolyte is not particularly limited in the present application, and may be selected according to a requirement. For example, the electrolyte may be liquid, gelled or all solid.

In some implementations, the electrolyte uses an electrolyte solution. The electrolyte solution includes an electrolyte salt and a solvent.

In some embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluorophosphate (LiPO₂F₂), lithium diofluoroxalate borate (LiDFOB), lithium dioxalate borate (LiBOB), lithium difluorodioxalate phosphate (LiDFOP), and lithium tetrafluorooxalate phosphate (LiTFOP).

In some implementations, the solvent may include one or more of ethylene carbonate (EC, 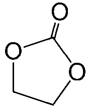 ), propylene carbonate (PC, 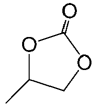 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 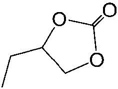 ), fluoroethylene carbonate (FEC), methyl acetate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and ethyl sulfonyl ethane.

In some embodiments, the electrolyte solution further optionally includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

In some implementations, the additive in the electrolyte solution may include, but is not limited to, one or more of fluoroethylene carbonate (FEC), difluoroethylene carbonate (DFEC), trifluoromethyl ethylene carbonate (TFPC), or the like.

### Separator

In some embodiments, the secondary battery further includes a separator. The type of the separator is not particularly limited in the present application, and any well-known porous separator with good chemical stability and mechanical stability may be used.

In some embodiments, a material of the separator may include one or more of glass fiber, non-woven fabric, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the thickness of the separator is 6 µm to 40 µm, optionally 12 µm to 20 µm.

In some embodiments, the positive electrode sheet, the negative electrode sheet, and the separator may be manufactured into an electrode assembly through a winding process or a lamination process.

In some embodiments, the secondary battery may include an outer package. The outer package may be used to package the foregoing electrode assembly and electrolyte.

In some embodiments, the outer package of the secondary battery may be a hard shell, for example, a hard plastic shell, an aluminum shell, or a steel shell. The outer package of the secondary battery may also be a pouch, such as a bag-type pouch. A material of the pouch may be plastic, and further, non-limiting examples of the plastic may include one or more of polypropylene, polybutylene terephthalate, and polybutylene succinate.

The secondary battery includes at least one battery cell. The secondary battery may include one or a plurality of battery cells.

In the present application, unless otherwise specified, a "battery cell" refers to a basic unit capable of implementing mutual conversion of chemical energy and electrical energy, and further, generally includes at least a positive electrode sheet, a negative electrode sheet, and an electrolyte. During charge and discharge of the battery, active ions are intercalated and deintercalated back and forth between the positive electrode sheet and the negative electrode sheet. The electrolyte functions to conduct active ions between the positive electrode sheet and the negative electrode sheet.

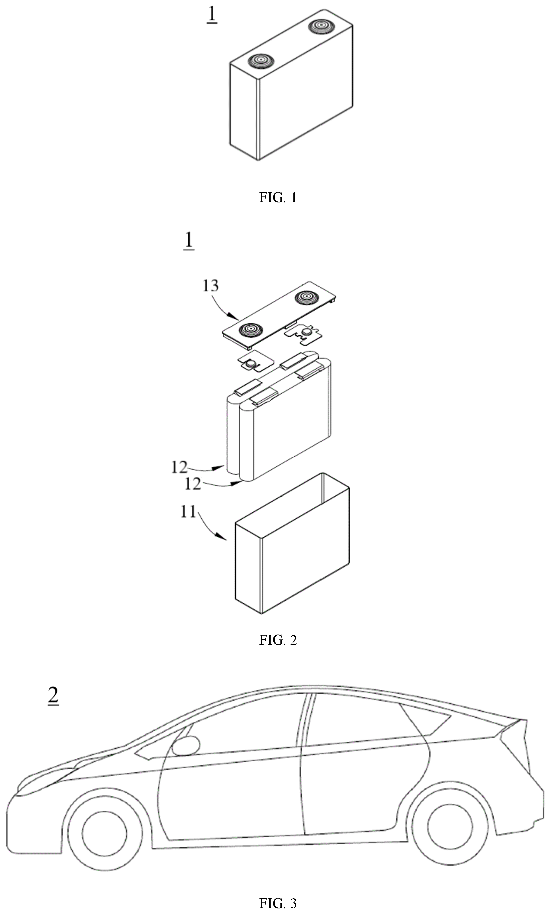

The shape of the battery cell is not particularly limited in the present application, and may be a cylindrical shape, a square shape, or any other shape. For example, FIG. 1 shows a secondary battery 1 of a square structure as an example.

In some embodiments, referring to FIG. 2, the outer package may include a housing 11 and a cover plate 13. The housing 11 may include a bottom plate and side plates connected to the bottom plate, and the bottom plate and the side plates define an accommodating chamber. The housing 11 has an opening communicating with the accommodating chamber, and the cover plate 13 can cover on the opening to close the accommodating chamber. The positive electrode sheet, the negative electrode sheet, and the separator may be formed into an electrode assembly 12 through a winding process or a lamination process. The electrode assembly 12 is packaged in the accommodating chamber. The electrolyte solution is impregnated into the electrode assembly 12. There may be one or a plurality of electrode assemblies 12 included in the secondary battery 1, and the quantity may be selected by those skilled in the art according to practical requirements.

The secondary battery may be a battery module or a battery pack.

The battery module includes at least one battery cell. There may be one or a plurality of battery cells included in the battery module, and those skilled in the art may select a proper quantity based on an application and the capacity of the battery module.

In the battery module, a plurality of battery cells may be arranged sequentially in a length direction of the battery module. Certainly, the battery cells may alternatively be arranged in any other manner. Further, the plurality of battery cells may be fastened by using fasteners.

Optionally, the battery module may further include a casing having an accommodating space in which the plurality of battery cells are accommodated.

In some embodiments, the foregoing battery modules may be further assembled into a battery pack, and there may be one or a plurality of battery modules included in the battery pack, and those skilled in the art may select a proper quantity according to an application and the capacity of the battery pack.

A battery case and a plurality of battery modules disposed in the battery case may be included in the battery pack. The battery case includes an upper case and a lower case, the upper case being capable of covering the lower case and forming a closed space for accommodating the battery modules. The plurality of battery modules may be arranged in the battery case in any manner.

In addition, the present application further provides an electric device, including the secondary battery provided in the present application. The secondary battery may be used as a power supply for the electric device, or as an energy storage unit for the electric device. The electric device may include, but is not limited thereto, a mobile device, an electric vehicle, an electric train, a ship, a satellite, an energy storage system, and the like. For example, the mobile device may be a mobile phone or a notebook computer. For example, the electric vehicle may be, but is not limited thereto, a full electric vehicle, a hybrid electric vehicle, a plug-in hybrid electric vehicle, an electric bicycle, an electric scooter, an electric golf cart, or an electric truck.

As an electric device, the secondary battery may be selected according to use requirements of the electric device.

FIG. 3 shows an electric device 2 as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the device may be a cell phone, a tablet computer, a notebook computer, or the like. This electric device is generally required to be thin and lightweight, and may use a secondary battery as a power supply.

In order to make the technical problems solved by the present application, the technical solutions, and the beneficial effects clearer, the present application will be further described in detail below with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

A preparation method of a negative electrode sheet in this example is as follows:
(1) A binder (styrene-butadiene rubber), a conductive agent (carbon black), and water were mixed to obtain a buffer slurry.
(2) An active material, the conductive agent, a thickening agent (sodium carboxymethyl cellulose), and the binder (styrene-butadiene rubber) were added to solvent water at a mass ratio of 96:2:1:1 and mixed uniformly to prepare a first active slurry.
(3) The active material, the conductive agent, the thickening agent (sodium carboxymethyl cellulose), and the binder (styrene-butadiene rubber) were added to the solvent water at a mass ratio of 96:2:1:1 and mixed uniformly to prepare a second active slurry.
(4) The buffer slurry, a negative electrode slurry, the first active slurry, and the second active slurry were sequentially and uniformly coated on a negative electrode current collector copper foil, followed by drying at 85 degrees Celsius (°C), and then cold pressing, to prepare the negative electrode sheet. The negative electrode sheet included a negative electrode current collector, and a buffer layer, a first active sublayer, and a second active sublayer that were sequentially stacked on the negative electrode current collector. The buffer layer, the first active sublayer, and the second active sublayer are as shown in Table 1.

### Example 2

Compared with Example 1, this example differs in that the active material in the first active sublayer further included a silicon-oxygen material.

### Example 3

Compared with Example 2, this example differs in that the conductive agent in the first active sublayer included carbon black and carbon nanotubes. A value of the mass ratio of the carbon nanotubes to the carbon black was 1.

### Examples 4 and 5

Compared with Example 3, Examples 4 and 5 differ in that the buffer layer had a different thickness.

### Examples 6 and 7

Compared with Example 3, Examples 6 and 7 differ in that the mass percentages of the binder and the conductive agent in the buffer layer were different.

### Example 8

Compared with Example 3, Example 8 differs in that the second active sublayer had a different active material.

### Example 9

Compared with Example 3, Example 9 differs in that the active materials of the first active sublayer and the second active sublayer were different.

### Example 10

Compared with Example 3, Example 10 differs in that the second active sublayer had a different conductive agent.

### Example 11

Compared with Example 3, Example 11 differs in that the thickness ratios of the first active sublayer and the second active sublayer were different.

### Examples 12 and 13

Compared with Example 3, Examples 12 and 13 differ in that the active material of the first active sublayer and/or the conductive agent of the second active sublayer were different.

### Comparative Example 1

Compared with Example 3, Comparative Example 1 differs in that there was no buffer layer.

A preparation method of a secondary battery is as follows:

### 1. Preparation of a positive electrode sheet

A positive electrode material LiNi_{0.8}Co_{0.1}Mn_{0.1}O₂, a conductive agent (acetylene black), and a binder (polyvinylidene fluoride (PVDF)) were uniformly mixed at a mass ratio of 97: 2: 1 and added into a solvent (N-methylpyrrolidone (NMP)), to prepare a positive electrode slurry; and the positive electrode slurry was uniformly coated on a positive electrode current collector aluminum foil, followed by drying at 85°C, cold pressing, die cutting, and slitting, to prepare the positive electrode sheet.

### (2) Preparation of a separator

A polyethylene microporous film was used as a porous separator substrate, inorganic aluminum trioxide powder, polyvinylpyrrolidone, and an acetone solvent were uniformly mixed at a weight ratio of 3:1.5:5.5 to prepare a slurry, and the slurry was coated on one surface of the substrate and dried, to obtain the separator.

### (3) Preparation of an electrolyte solution

A LiPF6₆ lithium salt was dissolved in a mixed solvent of ethylene carbonate, dimethyl carbonate, and ethyl methyl carbonate (the volume ratio of ethylene carbonate to dimethyl carbonate to ethyl methyl carbonate is 1:2:1), and a fluoroethylene carbonate (FEC) additive was added, to obtain the electrolyte solution. The concentration of LiPF₆ in the electrolyte solution was 1.3 moles/liter (mol/L), and the mass percentage of FEC was 20 wt%.

### (4) Preparation of the secondary battery

The positive electrode sheet, the negative electrode sheets in the examples and the comparative examples, and the separator were wound to obtain a bare cell, and then procedures such as packaging, liquid injection, formation, and degassing were performed, to obtain the corresponding secondary battery.

### Test examples

(1) The surface morphology of the current collectors in the negative electrode sheets prepared in the examples and comparative examples was tested by observing a contact cross section between an active material and a current collector with SEM on a cross section of an electrode sheet and testing the depth of the active material embedded in the current collector. Test results are as shown in Table 1.

(2) The prepared secondary battery was cycled for 300 cycles at 25°C, 0.5 coulomb (C)/0.5 C, and 2.8 volts (V) to 4.2 V, the capacity retention ratio was calculated, the battery was disassembled, coating detachment of the negative electrode sheet was observed with naked eyes, and detachment of the active layer in the negative electrode sheet was recorded as coating detachment. Test results are as shown in Table 1.

(3) The volumetric energy densities (VED) of the secondary batteries in the examples and the comparative examples were tested. The battery was left to stand in a constant temperature environment of 25°C for two hours (h), then charged to 4.2 V at a current of 0.33 C under a voltage of 2.8 V to 4.2 V, then charged under a constant voltage of 4.2 V until the current was less than or equal to 0.05 C, left to stand for 10 minutes (min), and then discharged to 2.8 V at a current of 0.33 C, and the capacity C0 of the battery was recorded. The VED is the ratio of C0 to the volume of a battery housing. Test results are separately shown in Table 1.

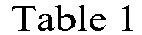

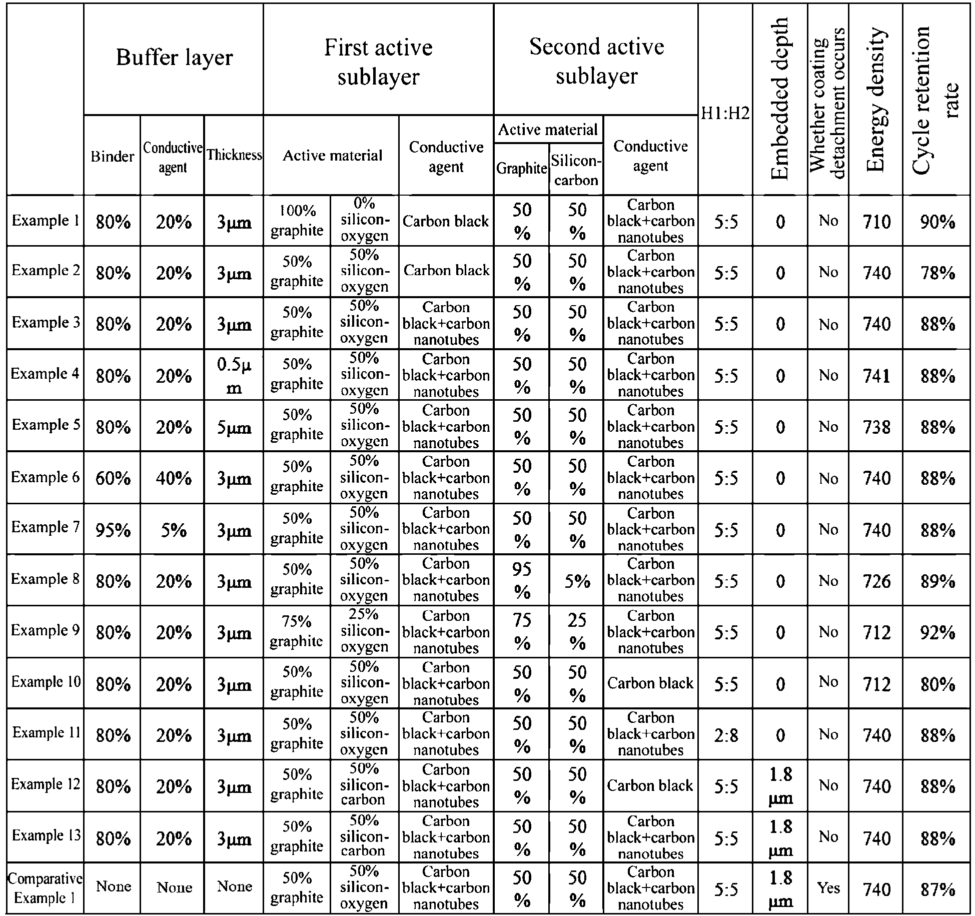

It can be understood that, in Table 1, "silicon-oxygen" represents a silicon-oxygen material. "Silicon-carbon" represents silicon-carbon composite particles. "Carbon black + carbon nanotubes" represents that a conductive agent includes carbon black and carbon nanotubes, and a value of the mass ratio of the carbon nanotubes to the carbon black is 1. "H1:H2" represents a thickness ratio of the first active sublayer to the second active sublayer. "Whether coating detachment occurs" represents whether the active layer in the negative electrode sheet is detached. "Energy density" represents the energy density of the secondary battery, and the unit is watt hour/liter (Wh/L). "Cycle retention rate" represents the capacity retention rate of the secondary battery after 300 cycles.

It can be learned from Table 1 that when the negative electrode sheet includes the buffer layer and the active material includes the silicon-carbon composite particles, the battery has a high energy density and good cycle performance. Further, when the conductive agent in the active layer includes carbon black and carbon nanotubes, the battery has a higher cycle retention rate.

The technical features of the above-mentioned example may be combined, and all possible combinations of the technical features in the above-mentioned embodiments are not described for concise description, however, it should be regarded that the combinations of the technical features are with the range described in the present description as long as there is no inconsistency.

The above examples merely illustrate several embodiments of the present application, which are described specifically and detailedly, but are not to be construed as limiting the scope of the patent for invention. It should be noted that, for those skilled in the art, several variations and modifications may be made without departing from the concept of the present application, which are all within the protection scope of the present application. Therefore, the scope of patent protection of the present application shall be subject to the appended claims.

## Claims

1. A negative electrode sheet, comprising a negative electrode current collector, a buffer layer, and an active layer, wherein the buffer layer is located between the negative electrode current collector and the active layer; the buffer layer includes a first binder; and an active material of the active layer comprises silicon-carbon composite particles, and the silicon-carbon composite particles comprise a porous carbon material and a silicon material located in pores of the porous carbon material.

2. The negative electrode sheet according to claim 1, wherein the thickness of the buffer layer is 0.5 µm to 5 µm;

3. The negative electrode sheet according to claim 1 or 2, wherein the buffer layer further includes a first conductive agent.

4. The negative electrode sheet according to claim 3, wherein the mass ratio of the first conductive agent to the first binder is (5-40):(60-95); and/or
the first conductive agent comprises at least one of superconducting carbon, acetylene black, carbon black, Ketjen black, carbon dots, carbon nanotubes, graphene, and carbon nanofibers.

5. The negative electrode sheet according to any one of claims 1 to 4, wherein the first binder comprises at least one of sodium carboxymethyl cellulose, lithium carboxymethyl cellulose, and styrene-butadiene rubber.

6. The negative electrode sheet according to any one of claims 1 to 5, wherein the buffer layer further includes first graphite.

7. The negative electrode sheet according to claim 6, wherein the mass percentage of the first graphite in the buffer layer is 50% to 80%.

8. The negative electrode sheet according to any one of claims 1 to 7, wherein the active material of the active layer further comprises second graphite.

9. The negative electrode sheet according to claim 8, wherein the mass ratio of the second graphite to the silicon-carbon composite particles is (50-95):(5-50).

10. The negative electrode sheet according to any one of claims 1 to 9, wherein the active layer comprises a first active sublayer and a second active sublayer, and the first active sublayer is located between the buffer layer and the second active sublayer; and an active material of the first active sublayer comprises third graphite, and an active material of the second active sublayer comprises the silicon-carbon composite particles.

11. The negative electrode sheet according to claim 10, wherein the active material of the first active sublayer further comprises a silicon-oxygen material.

12. The negative electrode sheet according to claim 11, wherein the mass ratio of the third graphite to the silicon-oxygen material is (50-75):(25-50).

13. The negative electrode sheet according to any one of claims 10 to 12, wherein the first active sublayer further includes a second conductive agent.

14. The negative electrode sheet according to claim 13, wherein the mass percentage of the second conductive agent in the first active sublayer is 0.5% to 3%.

15. The negative electrode sheet according to claim 13 or 14, wherein the second conductive agent comprises carbon nanotubes and carbon black.

16. The negative electrode sheet according to claim 15, wherein a value of the mass ratio of the carbon nanotubes to the carbon black is greater than or equal to 1.

17. The negative electrode sheet according to any one of claims 10 to 16, wherein the first active sublayer further includes a second binder.

18. The negative electrode sheet according to claim 17, wherein the mass percentage of the second binder in the first active sublayer is 1% to 4%; and/or
the second binder comprises at least one of styrene-butadiene rubber, polyacrylic acid, sodium polyacrylate, polyacrylamide, polyvinyl alcohol, sodium alginate, polymethacrylic acid, and carboxymethyl chitosan.

19. The negative electrode sheet according to any one of claims 10 to 18, wherein the active material of the second active sublayer further comprises fourth graphite.

20. The negative electrode sheet according to claim 19, wherein the mass ratio of the fourth graphite to the silicon-carbon composite particles is (50-95):(5-50).

21. The negative electrode sheet according to claim 19 or 20, wherein the second active sublayer further includes a third conductive agent.

22. The negative electrode sheet according to claim 21, wherein the mass percentage of the third conductive agent in the second active sublayer is 0.5% to 3%.

23. The negative electrode sheet according to claim 21 or 22, wherein the third conductive agent comprises carbon nanotubes and carbon black.

24. The negative electrode sheet according to claim 23, wherein a value of the mass ratio of the carbon nanotubes to the carbon black is greater than or equal to 1.

25. The negative electrode sheet according to any one of claims 10 to 24, wherein the second active sublayer further includes a third binder.

26. The negative electrode sheet according to claim 25, wherein the mass percentage of the third binder in the second active sublayer is 1% to 4%; and/or
the third binder comprises at least one of styrene-butadiene rubber, polyacrylic acid, sodium polyacrylate, polyacrylamide, polyvinyl alcohol, sodium alginate, polymethacrylic acid, and carboxymethyl chitosan.

27. The negative electrode sheet according to any one of claims 10 to 26, wherein the thickness ratio of the first active sublayer to the second active sublayer is (2-5):(5-8).

28. A secondary battery, comprising the negative electrode sheet according to any one of claims 1 to 27.

29. An electric device, comprising at least one of the negative electrode sheet according to any one of claims 1 to 27 and the secondary battery according to claim 28.
